# EUROPEAN PATENT APPLICATION

(11) **EP 3 927 030 A1**
(43) Date of publication of application: **22.12.2021**
(21) Application number: 19915252.1
(22) Date of filing: 14.02.2019
(51) Int. Cl.: H04W 52/18, H04W 88/06

(54) **TERMINAL, AND WIRELESS COMMUNICATION CONTROL METHOD**

(71) Applicant: NTT DOCOMO, INC., Chiyoda-Ku Tokyo 100-6150 (JP)
(72) Inventor: OGUMA, Yuta, Tokyo 100-6150 (JP); FURUTA, Takayuki, Tokyo 100-6150 (JP)
(74) Representative: Hoffmann Eitle
(86) International application number: PCT/JP2019/005443
(87) International publication number: WO 2020/166038

(57) **Abstract**

A terminal includes a reception section that receives control information on transmit power for a first frequency band, and a control section that controls, based on the control information, whether or not to transmit an uplink signal in a second frequency band.

## Description

### Technical Field

The present disclosure relates to a terminal and a radio communication control method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

It is known that a radio communication apparatus (e.g., a terminal) performs transmit power control to reduce interference with other equipment (e.g., Non-Patent Literature (hereinafter referred to as "NPL") 1) in a radio communication system.

### Citation List

### Non-Patent Literature

NPL 1 3GPP TS 36.101 v16.0.0, "User Equipment (UE) radio transmission and reception (Release 15)," December 2018

### Summary of Invention

### Technical Problem

However, there is room for further study on a method for the radio communication apparatus to reduce interference with other equipment more than existing techniques do.

An object of the present disclosure is to allow a radio communication apparatus to reduce interference with other equipment more than existing techniques do.

### Solution to Problem

A terminal according to one aspect of the present disclosure includes a reception section that receives control information on transmit power for a first frequency band, and a control section that controls, based on the control information, whether or not to transmit an uplink signal in a second frequency band.

### Advantageous Effects of Invention

According to the present disclosure, it is possible for a radio communication apparatus to reduce interference with other equipment more than existing techniques do.

### Brief Description of Drawings

FIG. 1 is a block diagram illustrating an example of a configuration of a base station according to an embodiment;
FIG. 2 is a block diagram illustrating an example of a configuration of a terminal according to an embodiment;
FIG. 3 is a flowchart illustrating an example of a control flow based on control method 1 according to an embodiment;
FIG. 4 is a flowchart illustrating an example of a control flow based on control method 2 according to an embodiment;
FIG. 5 is a flowchart illustrating an example of a control flow based on control method 3 according to an embodiment; and
FIG. 6 illustrates an example of a hardware configuration of the base station and the terminal according to an embodiment.

### Description of Embodiment

Hereinafter, an embodiment according to one aspect of the present disclosure will be described with reference to the accompanying drawings.

In NR, a broader band of frequencies including frequencies of an existing LTE frequency band and being broader than the LTE frequency band is utilized. For example, in NR, the frequency band is divided into two categories of frequency bands, called Frequency Range 1 (FR1) and Frequency Range 2 (FR2). FR1 denotes a frequency band of 6 GHz or less. FR1 is also referred to as Sub 6. FR2 denotes a higher frequency band than the frequency band of FR1, and includes a millimeter wave band, for example.

Transmit power control is specified for radio communication that uses the existing LTE frequency band and NR FR1. For example, information of which a base station notifies a terminal when the base station indicates transmit power control to the terminal is specified. Control information indicating the transmit power control may be referred to as "Pmax" or "Pmax control information," for example.

Note that, the LTE frequency band may hereinafter be referred to as "LTE band." Note also that, NR FR1 and NR FR2 may hereinafter be referred to as "FR1" and "FR2," respectively. Note also that, the LTE band and/or NR FR1 may hereinafter be referred as "LTE/FR1."

For example, in a radio communication system supporting communication in LTE/FR1 (hereinafter, referred to as "LTE/FR1 communication"), Pmax is specified by a base station in a case where the transmit power of a terminal is to be reduced for a place where precision equipment which may be affected by a radio wave is used (e.g., a hospital) or for adjustment of interference with another system. Pmax indicates the maximum transmit power, for example. The terminal controls the transmit power based on Pmax, for example, within a range where the transmit power is equal to or less than Pmax.

However, the transmit power control is not specified for a radio communication system supporting communication in FR2 (hereinafter, referred to as "FR2 communication"). Accordingly, for FR2, there is room for study on transmission control (e.g., transmit power control) for a place where precision equipment which may be affected by a radio wave is used (e.g., a hospital) or for adjustment of interference with another system.

If the transmit power control is not performed in the radio communication system supporting the FR2 communication, there is a risk that malfunctions occur in the precision equipment affected by radio waves, or interference with other systems occurs. Such concerns may result in limitations on the deployment of apparatuses supporting FR2 (e.g., base stations).

Further, when receiving a signal in FR2 (e.g., millimeter-wave band) from a base station in an area where NR communication is available, a terminal may transmit a signal in FR2 (e.g., millimeter-wave band) in response to reception of the signal from the base station, for example. By way of example, the terminal may form a beam with directivity in Uplink (UL) and transmits a UL signal for reporting Reference Signal Received Power (RSRP) upon receipt of a reference signal in FR2 (e.g., millimeter-wave band).

Since the base station and the terminal are distant from each other, the UL signal transmitted by the terminal has higher power in a peripheral area of the terminal than the downlink (DL) signal received by the terminal does. Therefore, in the peripheral area of the terminal, there is a risk that malfunctions occur in the precision equipment affected by radio waves, or interference with other systems occurs.

The present embodiment will be described in relation to a technique in which a radio communication apparatus (e.g., a terminal) reduces interference with another equipment by controlling a communication operation in FR2.

Note that, the communication operation in the present disclosure may include an operation in which a terminal transmits a UL signal (transmission operation), an operation in which a terminal receives a DL signal (reception operation), and an operation in which a terminal searches for a signal from a base station. Note also that, the transmission operation and the reception operation may include an operation of forming a beam and sweeping the formed beam.

### [Configurations of Base Station and Terminal]

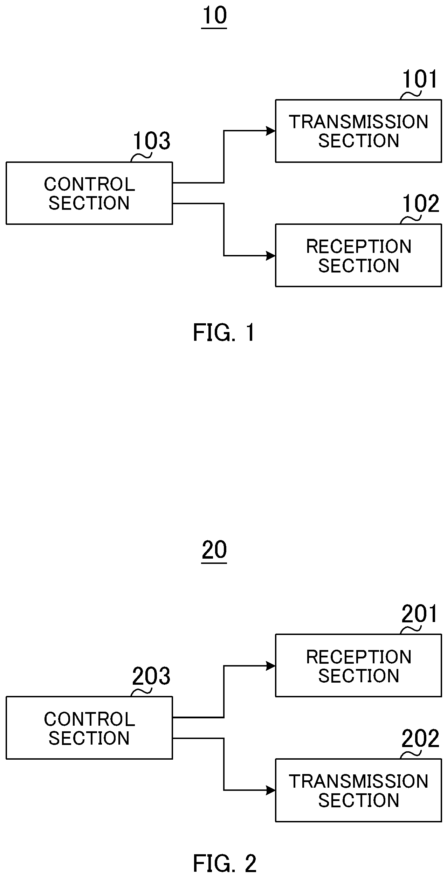

FIG. 1 is a block diagram illustrating an example of a configuration of base station 10 according to the present embodiment. Base station 10 includes, for example, transmission section 101, reception section 102, and control section 103.

Base station 10 according to the present embodiment communicates with terminal 20 (see FIG. 2) in the LTE band and/or FR1 and in FR2. Note that, a base station communicating with terminal 20 in the LTE band, a base station communicating with terminal 20 in FR1, and a base station communicating with terminal 20 in FR2 may be different base stations. Alternatively, a base station may partially or fully support the LTE-band communication, FR1 communication, and FR2 communication.

Transmission section 101 transmits a DL signal for terminal 20 to terminal 20. For example, transmission section 101 transmits the DL signal under the control of control section 103.

When base station 10 supports the LTE communication, the DL signal transmitted by base station 10 may include information indicating transmit power control in LTE. When base station 10 supports the FR1 communication, the DL signal transmitted by base station 10 may include information indicating transmit power control in FR1. For example, the information on the transmit power control in LTE or FR1 is referred to as Pmax. Pmax indicates the maximum transmit power for LTE or FR1, for example.

Reception section 102 receives a UL signal transmitted from terminal 20. For example, reception section 102 receives the UL signal under the control of control section 103.

Control section 103 controls transmission processing of transmission section 101 and reception processing of reception section 102. For example, control section 103 receives data, control information, and the like from a higher layer (not illustrated), and outputs the data and the control information to transmission section 101. Control section 103 also outputs data, control information, and the like received from reception section 102 to the higher layer.

When base station 10 supports the LTE communication, control section 103 may determine whether or not to indicate the transmit power control in LTE to terminal 20. When base station 10 supports the FR1 communication, control section 103 may determine whether or not to indicate the transmit power control in FR1 to terminal 20. Then, control section 103 may determine Pmax for terminal 20 to which the transmit power control is indicated, and may output the determined Pmax to transmission section 101.

FIG. 2 is a block diagram illustrating an example of a configuration of terminal 20 according to the present embodiment. Terminal 20 includes reception section 201, transmission section 202, and control section 203, for example.

Terminal 20 according to the present embodiment communicates with base station 10 in the LTE band and/or FR1 and in FR2. Note that, a base station communicating with terminal 20 in the LTE band, a base station communicating with terminal 20 in FR1, and a base station communicating with terminal 20 in FR2 may be different base stations. Alternatively, a base station with which terminal 20 communicates may partially or fully support the LTE-band communication, FR1 communication, and FR2 communication.

Terminal 20 may be connected to base station 10 operating in the LTE band and/or FR1 and to base station 10 operating in FR2, for example, by Dual Connectivity (DC).

Note that, base station 10 operating in the LTE band and/or FR1 may hereinafter be referred to as "LTE/FR1 base station 10." LTE/FR1 base station 10 supports at least one of the LTE-band communication and the FR1 communication, but may also support the FR2 communication, for example. Note also that, base station 10 operating in FR2 may be referred to as "FR2 base station 10." FR2 base station 10 supports at least the FR2 communication, but may also support the LTE-band communication and/or FR1 communication, for example.

Reception section 201 receives a DL signal transmitted from base station 10. For example, reception section 201 receives the DL signal in the LTE frequency band and/or FR1 under the control of control section 203. Further, reception section 201 receives a DL signal in FR2 under the control of control section 203, for example. Note that, transmitter(s) of the DL signals received by reception section 201 may be the same base station 10 (base station 10 operating in the LTE frequency band and/or FR1 and in FR2), or may also be different base stations 10 (e.g., LTE/FR1 base station 10 and FR2 base station 10).

Transmission section 202 transmits a UL signal to base station 10. For example, transmission section 202 transmits the UL signal in the LTE band and/or FR1 under the control of control section 203. Further, transmission section 202 transmits a UL signal in FR2 under the control of control section 203, for example. Target(s) to which transmission section 202 transmits the UL signals may be the same base station 10 or different base stations 10.

Control section 203 controls a communication operation including reception processing of reception section 201 and transmission processing of transmission section 202. For example, control section 203 detects Pmax included in the DL signal in the LTE band and/or FR1. Further, when detecting Pmax included in the DL signal in the LTE band, control section 203 controls the transmit power for the LTE band based on Pmax, for example. When detecting Pmax included in the DL signal in FR1, control section 203 controls the transmit power for FR1 based on Pmax, for example. Further, when detecting Pmax included in the DL signal in the LTE band and/or FR1, control section 203 controls the communication operation in FR2 based on Pmax.

Note that, terminal 20 may form a directive beam when operating in FR2. For example, terminal 20 may form a beam in a particular direction when transmitting a UL signal. In addition, terminal 20 may sweep a beam when searching for base station 10 for connection in FR2 and/or when searching for a DL signal including control information or the like from base station 10 in FR2.

Here, the control on the communication operation of terminal 20 in FR2 may include any one or more of the control on the transmit power of a UL signal in FR2, the ON/OFF control on communication (e.g., transmission of a UL signal) (the control of continuing/stopping the communication), the control on a beam pattern, and the like, for example.

Note that the operation of terminal 20 may be a FR2 Standalone (SA) operation. Alternatively, the operation of terminal 20 may be a Non Standalone (NSA) operation. For example, terminal 20 may communicate in FR2 in combination with FR1 and/or the LTE band.

The control on the communication operation will be exemplified in three control methods below. Note that the control methods in the present disclosure are not limited to these three methods.

### [Control Method 1]

In control method 1, terminal 20 controls, based on control information on the transmit power for the LTE band and/or FR1, whether or not to reduce the transmit power of a UL signal in FR2.

For example, reception section 201 of terminal 20 receives the control information (e.g., Pmax) on the transmit power for the LTE band and/or FR1, and control section 203 controls whether or not to reduce the transmit power of the UL signal in FR2 based on the control information.

For example, the control of reducing the transmit power may be carried out in a baseband chip that performs baseband signal processing such as modulation processing. Alternatively, in the control of reducing the transmit power, an RF device that performs signal processing for Radio Frequency (RF) bands such as frequency conversion processing (upconversion) may measure the transmit power and adjust the transmit power based on the measured transmit power.

The control of reducing the transmit power may be control in which Total Radiated Power (TRP) or Peak Equivalent Isotropic Radiated Power (Peak EIRP) of a terminal is reduced by setting Power-Maximum Power Reduction (P-MPR), which is an example of a back-off value with respect to the maximum transmit power of the terminal.

For example, the control of reducing the transmit power may be control of reducing Peak EIRP by changing a beam pattern of a transmission beam.

For example, the control of reducing the transmit power may be control of reducing the power of a beam directed in a particular direction (e.g., a direction in which a radio wave in FR2 is not desired to reach a destination) by changing a beam pattern of a transmission beam. The control of reducing the power of the beam directed in the particular direction may, for example, be control of directing a null in the particular direction.

Further, when terminal 20 receives Pmax, the terminal may independently perform control of reducing the transmit power. The independent control corresponds to autonomous control and, for example, corresponds to control performed irrespective of indication of the level of transmit power from base station 10.

Alternatively, terminal 20 may notify base station 10 that the transmit power for FR2 is reduced. In this case, base station 10 may reduce the transmit power to be indicated to terminal 20 and indicate the reduced transmit power to terminal 20.

Note that, although, based on whether or not Pmax is received, terminal 20 reduces the transmit power when receiving Pmax in the above-described example, the present disclosure is not limited thereto. For example, terminal 20 may determine whether or not to reduce transmit power based on a value indicated by Pmax and/or based on the number of received Pmaxes. By way of further example, when determining to reduce the transmit power, terminal 20 may control a reduction amount of the transmit power based on the value indicated by Pmax and/or the number of received Pmaxes.

For example, terminal 20 may be configured with a first threshold for comparison with the value of Pmax, and may determine, based on the result of the comparison, whether or not to reduce the transmit power. For example, terminal 20 may reduce the transmit power when the value of Pmax is equal to or less than the first threshold, or may not reduce the transmit power when the value of Pmax is greater than the first threshold. Further, a second threshold that is equal to or less than the first threshold may be provided, and terminal 20 may control the reduction amount of the reduced transmit power based on the result of the comparison. For example, terminal 20 may set different reduction amounts of the reduced transmit power, which are different between a case where the value of Pmax is equal to or less than the second threshold and a case where Pmax is greater than the second threshold.

Although Pmax is information on power control in the LTE band and/or FR1, it can be presumed that power control in FR2 is also desired in an area where the power control in the LTE band and/or FR1 is desired. Thus, terminal 20 may determine, depending on the magnitude of the value of Pmax (i.e., the level of power to be reduced in FR1), whether or not the transmit power for FR2 is to be reduced, and may control the reduction amount of the transmit power when the transmit power is reduced.

By way of further example, terminal 20 may determine, based on the number of received Pmaxes per predetermined time period, whether or not to reduce the transmit power. For example, terminal 20 may reduce the transmit power when the number of received Pmaxes is equal to or greater than a predetermined number, and may not reduce the transmit power when the number of notified Pmaxes is less than the predetermined number. Terminal 20 may also control the reduction amount of the transmit power based on the number of received Pmaxes per unit time.

The case where terminal 20 receives a plurality of Pmaxes may, for example, be a case where terminal 20 receives Pmax notifications from a plurality of LTE/FR1 base stations 10. In addition, the predetermined number may, for example, be an integer equal to or greater than 1.

For example, when a predetermined number of base stations 10 or more base stations than the predetermined number of base stations (e.g., two or more base stations 10) notify Pmax, it is presumed that requirements on power control in an area in which the predetermined number of base stations 10 are disposed are stricter than in a case where fewer base stations 10 than the predetermined number of base stations 10 (e.g., one base station 10) notify Pmax. Therefore, terminal 20 may determine, depending on the number of received Pmaxes, whether or not to reduce the transmit power, and may control the reduction amount of the transmit power when the transmit power is to be reduced.

By way of further example, terminal 20 may determine whether or not to reduce the transmit power based on both the value of Pmax and the number of Pmaxes. For example, terminal 20 may determine to reduce the transmit power when a predetermined number of Pmaxes or more Pmaxes than the predetermined number of Pmaxes which are equal to or less than a threshold are received, or otherwise may determine not to reduce the transmit power. Terminal 20 may also control, based on both the value of Pmax and the number of Pmaxes, the reduction amount of the transmit power to be reduced, for example.

Terminal 20 may also determine whether or not to reduce the transmit power based on other information than Pmax of which base station 10 notifies the terminal. For example, terminal 20 may determine, based on location information of other devices, whether or not to reduce the transmit power.

For example, a device that operates in the LTE band and/or FR1 and notifies LTE/FR1 base station 10 of location information (which may hereinafter be referred to as "reference device") may be installed in an area where protection from radio waves is required (which may hereinafter be referred to as "protection area"). Here, the installed reference device supports Pmax-based transmit power control in the LTE band and/or FR1.

Terminal 20 receives, for example, the location information of terminal 20 and the location information of the reference device via LTE/FR1 base station 10. Terminal 20 may determine whether or not terminal 20 exists in the protection area based on the location information of terminal 20 and the location information of the reference device. Terminal 20 may then reduce the transmit power for FR2 when existing in the protection area.

Additionally or alternatively, FR2 base station 10 may receive the location information of the reference device via LTE/FR1 base station 10 to identify a direction in which the protection area exists, for example. Then, FR2 base station 10 may perform control of not directing any beam in the identified direction. In this case, even if terminal 20 exists in the protection area, the terminal can be prevented from transmitting a UL signal in FR2 since the terminal does not communicate with FR2 base station 10 in FR2.

In addition, when receiving Pmax, terminal 20 may estimate the distance between base station 10 and terminal 20 based on a reference signal from base station 10 in the LTE band and/or FR1 to control the transmit power.

For example, terminal 20 which has determined that the vicinity of LTE/FR1 base station 10 is a protection area does not reduce the transmit power for FR2 when the distance between LTE/FR1 base station 10 and terminal 20 is equal to or greater than a predetermined distance. On the other hand, terminal 20 reduces the transmit power for FR2 when the distance is less than the predetermined distance.

Next, a description will be given of an example of a flow of control based on above-described control method 1.

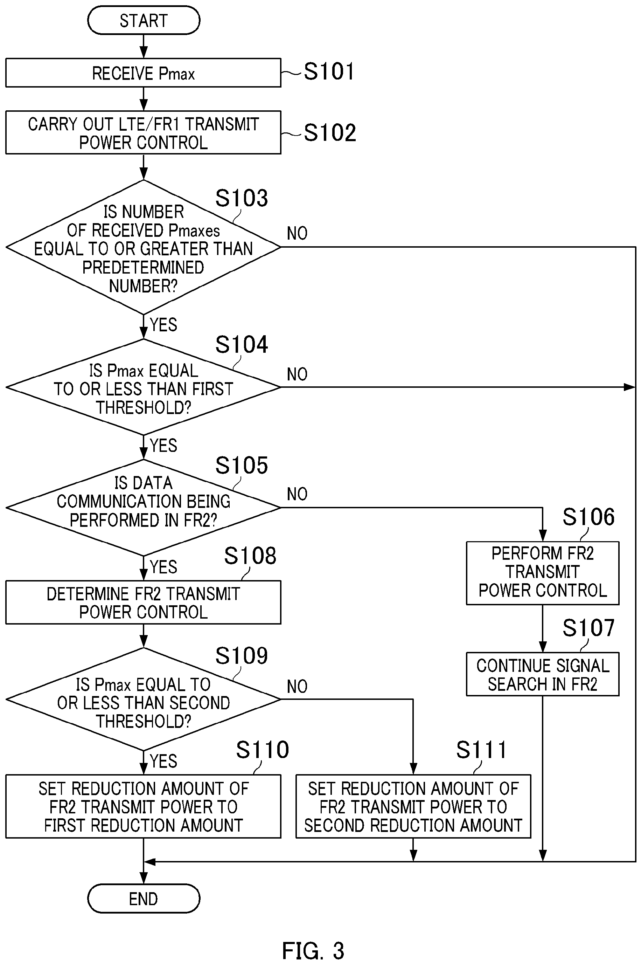

FIG. 3 is a flowchart illustrating an example of a control flow based on control method 1 according to the present embodiment. The flowchart illustrated in FIG. 3 starts, for example, when terminal 20 receives Pmax from base station 10.

Terminal 20 receives Pmax from base station 10 (SI01).

Terminal 20 may carry out LTE/FR1 transmit power control based on Pmax (S102).

Terminal 20 determines whether or not the number of received Pmaxes per predetermined time period is equal to or greater than a predetermined number (SI03). When the predetermined number is 1, terminal 20 does not have to perform the determination process.

When the number of received Pmaxes is neither equal to nor greater than the predetermined number (NO at S 103), the control flow according to control method 1 ends.

When the number of received Pmaxes is equal to or greater than the predetermined number (YES at S103), terminal 20 determines whether or not Pmax is equal to or less than a first threshold (S104).

Note that, when a plurality of Pmaxes are received, all or some of the plurality of Pmaxes may be compared with the first threshold, or, the smallest Pmax, the greatest Pmax, or the average of the plurality of Pmaxes may be compared with the first threshold.

When Pmax is neither equal to nor less than the first threshold (NO at S104), the control flow according to control method 1 ends.

When Pmax is equal to or less than the first threshold (YES at S104), terminal 20 determines whether or not the terminal is in data communication in FR2 (S105).

When not in data communication (NO at S105), the terminal carries out FR2 transmit power control based on Pmaxes (S106).

Terminal 20 then continues signal search in FR2 (SI07). Then, the control flow based on control method 1 ends.

When in data communication (YES at S105), terminal 20 determines to perform the FR2 transmit power control (S108).

Then, terminal 20 determines whether or not Pmax is equal to or less than a second threshold (S109). Note that, the second threshold may, for example, be equal to or less than the first threshold used at S104.

When Pmax is equal to or less than the second threshold (YES at S109), terminal 20 sets the reduction amount of FR2 transmit power to a first reduction amount (S110). For example, the first reduction amount is greater than a second reduction amount at S111 described later. Terminal 20 continues data communication at transmit power reduced by the first reduction amount. Then, the control flow based on control method 1 ends.

When Pmax is neither equal to nor less than the second threshold (NO at S109), terminal 20 sets the reduction amount of FR2 transmit power to the second reduction amount (S111). Terminal 20 continues data communication at the transmit power reduced by the second reduction amount. Then, the control flow based on control method 1 ends.

Note that, one or both of the processes of S103 and S104 may be skipped in the above-described control flow. For example, neither of the processes of S103 and S104 may be carried out when terminal 20 controls the communication operation based on the presence or absence of Pmax as described above. In this instance, S103 and S104 may be skipped, for example, after the process of S102.

By way of further example, the process of S103 does not have to be carried out when the communication operation is not controlled based on the number of received Pmaxes. In this instance, S103 may be skipped, for example, after the process of S102.

By way of further example, the process of S104 does not have to be carried out when the communication operation is not controlled based on the value of Pmax. In this instance, S104 may be skipped, for example, after the process of S103.

Further, in addition to the processes of S103 and S104, or instead of at least one of the processes of S103 and S104 in the above-described control flow, terminal 20 may determine, based on information on locations of other devices, whether or not to reduce the transmit power. The information on the locations of the other devices may, for example, be the distance between terminal 20 and base station 10, or may be the location coordinate of a device operating in the LTE band and/or FR1 and supporting Pmax-based transmit power control.

By way of further example, terminal 20 may gradually reduce the transmit power at S110 and/or S111 in the control flow described above. For example, terminal 20 may reduce the transmit power by 1 dB per unit time. In this case, the initial reduction amount of the transmit power and the gradually-reduced reduction amount may be set in advance or base station 10 may notify of such reduction amounts. For example, the initial reduction amount that is relatively greater than the reduction amount at S111 may be set at S110, and further, the gradually-reduced reduction amount may be greater than the reduction amount at S111.

In addition, terminal 20 does not have to carry out the FR2 transmit power control at S111.

In the control flow described above, the processes of from S109 to S111, which are processes for changing the setting of the reduction amount of FR2 transmit power depending on the value of Pmax, may be omitted.

For example, a predefined reduction amount of the transmit power may be used instead of setting a reduction amount of the transmit power in the processes of from S109 to S111. In this instance, terminal 20 determines the FR2 transmit power control (S108) and sets the reduction amount of the FR2 transmit power to a preset reduction amount. Then, terminal 20 may continue the data communication at the transmit power reduced by the set reduction amount.

In control method 1 described above, terminal 20 controls, based on the control information on the transmit power for the LTE band and/or FR1, whether or not to reduce the transmit power of the UL signal in FR2. This method makes it possible for terminal 20 to appropriately reduce the transmit power even in radio communication using FR2 for which transmit power control is not specified, so as to reduce interference with other equipment more than the existing techniques do.

Moreover, in control method 1 described above, terminal 20 determines, based on the value of Pmax and/or the number of Pmaxes, whether or not to control the transmit power for FR2. This method makes it possible for terminal 20 to perform control whereby power control in FR2 is not performed when power control is desired in the LTE band and/or FR1 but not in FR2.

### [Control Method 2]

In control method 2, terminal 20 controls, based on control information on the transmit power for the LTE band and/or FR1, whether or not to stop communication (e.g., transmission of a UL signal) in FR2.

For example, reception section 201 of terminal 20 receives the control information (e.g., Pmax) on the transmit power for the LTE band and/or FR1, control section 203 controls, based on the control information, whether or not to stop communication in FR2. For example, terminal 20 may stop the communication in FR2 by stopping supplying power related to the communication in FR2.

Note that, instead of stopping the communication in FR2, terminal 20 may fall back, in terms of communication system (frequency band) for use, to another communication system such as that in the LTE band, FR1, and/or the like so as to continue the communication. Terminal 20 may stop the communication in FR2 after falling back, in terms of communication system for use, to the other communication system, or may fall back to the other communication system after stopping the communication in FR2. Alternatively, the fallback to the other communication system and the stoppage of the communication in FR2 may be performed simultaneously.

When receiving Pmax, terminal 20 may independently stop transmission request in FR2. Alternatively, terminal 20 may notify base station 10 that UL transmission in FR2 is stopped. In this case, FR2 base station 10 in receipt of the notification may not provide terminal 20 with a transmission opportunity in FR2. Terminal 20 is given no transmission opportunity in FR2, so that the transmission in FR2 is stopped.

For example, terminal 20 may notify base station 10 of receipt of Pmax so that base station 10 may not assign any FR2 transmission grant to terminal 20. When no transmission grant is assigned, terminal 20 stops transmission.

Note that, although, based on whether or not Pmax is received, terminal 20 stops the communication in FR2 when receiving Pmax in the above-described example, the present disclosure is not limited thereto. For example, terminal 20 may determine whether or not to stop communication in FR2 based on a value indicated by Pmax and/or based on the number of received Pmaxes.

For example, terminal 20 may be configured with a threshold for comparison with the value of Pmax, and may control, based on the result of the comparison, stoppage of communication. For example, terminal 20 may stop the communication in FR2 when the value of Pmax is equal to or less than the threshold, and may not stop the communication in FR2 when the value of Pmax is greater than the threshold.

Although Pmax is information on power control in the LTE band and/or FR1, it can be presumed that power control in FR2 is also desired in an area where the power control in the LTE band and/or FR1 is desired. Therefore, terminal 20 may determine whether or not to stop the communication in FR2 depending on whether or not the value of Pmax is equal to or less than the threshold (that is, whether or not the power to be reduced in the LTE band and/or FR1 is large).

By way of further example, terminal 20 may determine, based on the number of received Pmaxes per predetermined time period, whether or not to stop communication. For example, terminal 20 may determine to stop communication in FR2 when the number of received Pmaxes is equal to or greater than a predetermined number, and may determine not to stop (determine to continue) the communication when the number of Pmaxes is less than the predetermined number.

For example, when a predetermined number of base stations 10 or more base stations than the predetermined number of base stations (e.g., two or more base stations 10) notify Pmax, it is presumed that requirements on power control in an area in which the predetermined number of base stations 10 are disposed are stricter than in a case where fewer base stations 10 than the predetermined number of base stations 10 (e.g., one base station 10) notify Pmax. Therefore, terminal 20 may determine whether or not to stop the communication in FR2 according to the number of received Pmaxes.

By way of further example, terminal 20 may determine whether or not to stop the communication in FR2 based on both the value of Pmax and the number of Pmaxes. For example, terminal 20 may determine to stop the communication in FR2 when a predetermined number of Pmaxes or more Pmaxes than the predetermined number of Pmaxes which are equal to or less than a threshold are received, or otherwise may determine not to stop the communication in FR2.

By way of further example, terminal 20 may determine, based on at least one of the value of Pmax and the number of Pmaxes, whether to immediately stop the communication in FR2 or to stop communication after gradually reducing the transmit power.

Terminal 20 may also determine whether or not to stop the communication in FR2 based on other information than Pmax of which base station 10 notifies the terminal. For example, terminal 20 may determine, based on location information of other devices, whether or not to stop the communication in FR2.

For example, a reference device that operates in the LTE band and/or FR1 and notifies LTE/FR1 base station 10 of location information may be installed in a protection area. Here, the installed reference device supports Pmax-based transmit power control in the LTE band and/or FR1.

Terminal 20 receives the location information of terminal 20 and the location information of the reference device via LTE/FR1 base station 10. Terminal 20 may determine whether or not terminal 20 exists in the protection area based on the location information of terminal 20 and the location information of the reference device. Terminal 20 may then stop the communication in FR2 when existing in the protection area.

Additionally or alternatively, FR2 base station 10 may receive the location information of the reference device via LTE/FR1 base station 10 to identify a direction in which the protection area exists, for example. Then, FR2 base station 10 may perform control of not directing any beam in the identified direction. In this case, even if terminal 20 exists in the protection area, the terminal can be prevented from transmitting a UL signal in FR2 since the terminal does not communicate with FR2 base station 10 in FR2.

In addition, when receiving Pmax, terminal 20 may estimate the distance between base station 10 and terminal 20 based on a reference signal from base station 10 in the LTE band and/or FR1.

For example, terminal 20 which has determined that the vicinity of LTE/FR1 base station 10 is a protection area does not stop the communication in FR2 when the distance between LTE/FR1 base station 10 and terminal 20 is equal to or greater than a predetermined distance. On the other hand, terminal 20 stops the communication in FR2 when the distance is less than the predetermined distance.

Next, a description will be given of an example of a flow of control based on above-described control method 2.

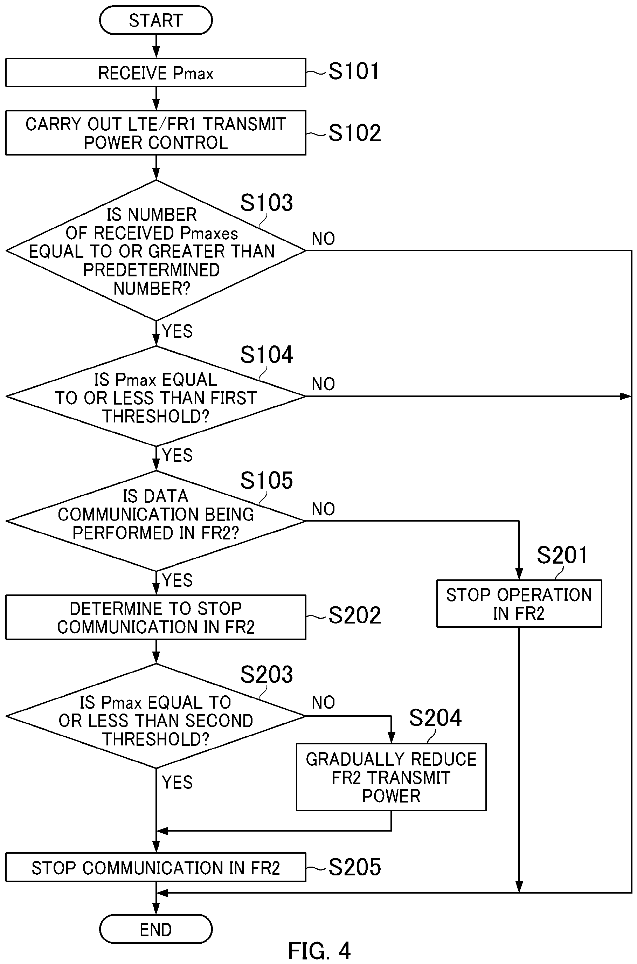

FIG. 4 is a flowchart illustrating an example of a control flow based on control method 2 according to the present embodiment. The flowchart illustrated in FIG. 4 starts, for example, when terminal 20 receives Pmax from base station 10. Note that, similar processes between FIG. 4 and FIG. 3 are provided with the same reference numerals and descriptions of such processes may be omitted.

When Pmax is equal to or less than a first threshold (YES at S104), terminal 20 determines whether or not the terminal is in data communication in FR2 (S105).

When not in data communication (NO at S105), terminal 20 stops operation in FR2 (S201). Then, the control flow based on control method 2 ends.

When in data communication (YES at S105), terminal 20 determines to stop communication in FR2 (S202).

Then, terminal 20 determines whether or not Pmax is equal to or less than a second threshold (S203). Note that, the second threshold may, for example, be equal to or less than the first threshold used at S104.

When Pmax is equal to or less than the second threshold (YES at S203), terminal 20 stops the communication in FR2 (S205). Then, the control flow based on control method 2 ends.

When Pmax is neither equal to nor less than the second threshold (NO at S203), terminal 20 performs control of gradually reducing FR2 transmit power (S204). For example, the transmit power may be gradually reduced until a predetermined time of data communication (e.g., a time that lasts until a predetermined amount of data is transmitted) elapses. Then, the terminal stops the communication in FR2 (S205), and the control flow based on control method 2 ends.

Note that, similarly to control method 1, one or both of the processes of S103 and S104 do not have to be carried out also in the control flow described above about control method 2. Further, similarly to control method 1, in addition to the processes of S103 and S104, or instead of at least one of the processes of S103 and S104, terminal 20 may determine, based on information on locations of other devices, whether or not to stop the communication as described above.

Further, the processes of S203 and S204 may not be carried out in the above-described control flow. For example, when the processes of S203 and S204 are not carried out, terminal 20 may carry out the process of S205 (the process of stopping FR2 transmission) after determining to stop FR2 transmission (after the process of S202).

Additionally or alternatively, terminal 20 may fall back, in terms of communication system for use, to another communication system (e.g., a communication system in LTE and/or FR1, or Wi-Fi (registered trademark)) after the communication in FR2 is stopped at S205 in the above-described control flow.

In control method 2 described above, terminal 20 controls, based on the control information on the transmit power for the LTE band and/or FR1, whether or not to stop the communication (e.g., transmission of a UL signal) in FR2. This method makes it possible for terminal 20 to appropriately stop the communication even in radio communication using FR2 for which transmit power control is not specified, so as to reduce interference with other equipment more than the existing techniques do.

Moreover, in control method 2 described above, terminal 20 determines, based on the value of Pmax and/or the number of Pmaxes, whether or not to stop the communication in FR2. This method makes it possible for terminal 20 to perform control whereby the communication in FR2 is not stopped when power control is desired in the LTE band and/or FR1 but not in FR2.

### [Control Method 3]

Control method 1 and control method 2 have been described above in relation to examples in which terminal 20 performs control on a communication operation for performing data communication (transmit power control or stoppage of communication). In control method 3, terminal 20 stops part of a signal search process performed when searching for base station 10 for connection in FR2. The signal search process may, for example, be a process of searching for a DL signal including control information or the like from base station 10 or a process of performing UL beam sweep for establishing connection with base station 10, or both of the processes.

For example, reception section 201 of terminal 20 receives control information (e.g., Pmax) on transmit power for the LTE band and/or FR1. Control section 203 controls, based on the control information, whether or not to stop the signal search process in FR2 (e.g., a UL beam sweep process in FR2, and/or a process of searching for a DL signal in FR2).

For example, instead of stopping the UL beam sweep, terminal 20 may perform control of reducing the peak value of a beam in the UL beam sweep.

Note that, terminal 20 may determine, based on a value indicated by Pmax and/or based on the number of received Pmaxes, whether or not to stop the signal search process in FR2.

For example, terminal 20 may be configured with a threshold for comparison with the value of Pmax, and may perform the control based on the result of the comparison. For example, terminal 20 may stop the signal search process in FR2 when the value of Pmax is equal to or less than the threshold, and may not stop the signal search process in FR2 when the value of Pmax is greater than the threshold.

Although Pmax is information on power control in the LTE band and/or FR1, it can be expected that power control in FR2 is also desired in an area where the power control in the LTE band and/or FR1 is desired. Therefore, terminal 20 may determine whether or not to stop the signal search process in FR2 depending on whether or not the value of Pmax is equal to or less than the threshold (that is, whether or not the power to be reduced in the LTE band and/or FR1 is large).

By way of further example, terminal 20 may perform the control based on the number of received Pmaxes per predetermined time period. For example, terminal 20 may stop the signal search process in FR2 when the number of received Pmaxes is equal to or greater than a predetermined number, and may not stop the signal search process in FR2 when the number of Pmaxes is less than the predetermined number.

For example, when a predetermined number of base stations 10 or more base stations than the predetermined number of base stations (e.g., two or more base stations 10) notify Pmax, it is presumed that requirements on power control in an area in which the predetermined number of base stations 10 are disposed are stricter than in a case where fewer base stations 10 than the predetermined number of base stations 10 (e.g., one base station 10) notify Pmax. Therefore, terminal 20 may determine whether or not to stop the signal search process in FR2 according to the number of received Pmaxes.

By way of further example, terminal 20 may determine whether or not to stop the signal search process in FR2 based on both the value of Pmax and the number of Pmaxes. For example, terminal 20 may determine to stop the signal search process in FR2 when a predetermined number of Pmaxes or more Pmaxes than the predetermined number of Pmaxes which are equal to or less than a threshold are received, or otherwise may determine not to stop the process.

Next, a description will be given of an example of a flow of control based on above-described control method 3.

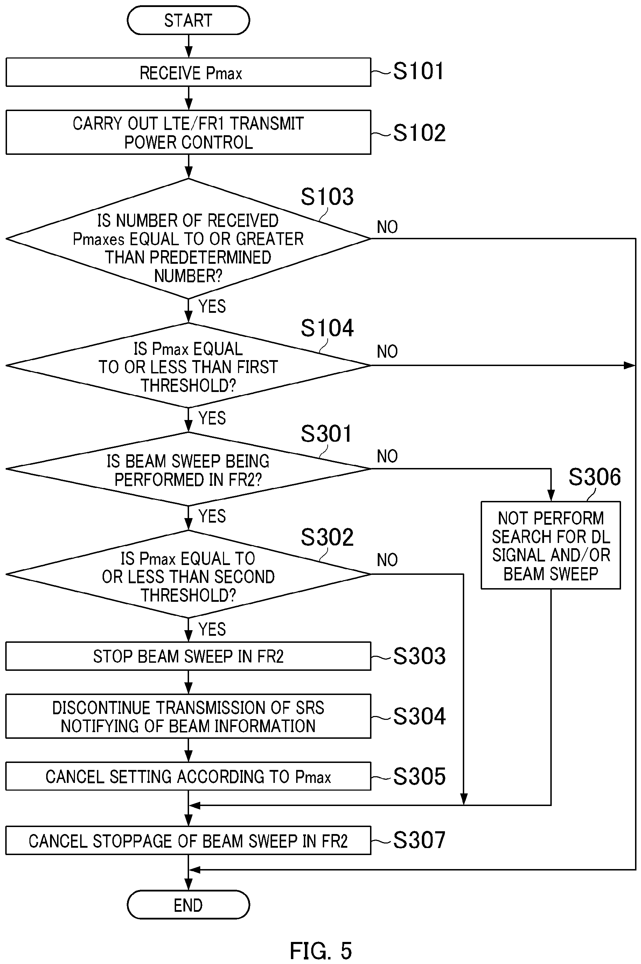

FIG. 5 is a flowchart illustrating an example of a control flow based on control method 3 according to the present embodiment. The flowchart illustrated in FIG. 5 starts, for example, when terminal 20 receives Pmax from base station 10. Note that, similar processes between FIG. 5 and FIG. 3 are provided with the same reference numerals and descriptions of such processes may be omitted.

When Pmax is equal to or less than a first threshold (YES at S104), terminal 20 determines whether or not the terminal is performing beam sweep in FR2 (S301).

When terminal 20 is performing the beam sweep in FR2 (YES at S301), the terminal determines whether or not Pmax is equal to or less than the second threshold (S302).

When Pmax is equal to or less than a second threshold (YES at S302), terminal 20 stops the beam sweep in FR2 (S303).

Then, terminal 20 discontinues (or stops) transmission of a Sounding Reference Signal (SRS) notifying of beam information (S304).

Then, terminal 20 cancels setting according to Pmax, and cancels stoppage of the communication operation in FR2 (S305). Then, terminal 20 carries out the process of S307.

When terminal 20 is not performing the beam sweep in FR2 (NO at S301), the terminal does not perform search for a DL signal and/or the UL beam sweep (S306). Then, terminal 20 carries out the process of S307.

When Pmax is neither equal to nor less than the second threshold (NO at S302) or when the beam sweep in FR2 has been stopped after the process of S305 or S306, terminal 20 cancels stoppage of the beam sweep in FR2 (S307). Then, the control flow based on control method 3 ends.

Note that, similarly to control method 1, one or both of the processes of S103 and S104 do not have to be carried out also in the control flow described above about control method 3.

Further, the process of S302 may not be carried out in the above-described control flow. For example, if the process of S302 is not carried out and when terminal 20 is performing the beam sweep in FR2 (YES at S301), the terminal may skip S302 and carry out the process of S303 (process of stopping the beam sweep in FR2).

Further, the process of S307 may not be carried out in the above-described control flow. For example, if the process of S307 is not carried out, terminal 20 may continue stoppage of the beam sweep.

Further, the process of S305 may be carried out based on Pmax in the above-described control flow. For example, terminal 20 may cancel the setting according to Pmax and cancel the stoppage of the communication operation in FR2 when the value of Pmax received at or after a predetermined timing is greater than a threshold and/or when the number of Pmaxes is less than a predetermined threshold. Note that, the "predetermined timing" may correspond to the timing at which terminal 20 has received Pmax in the process of S101, or may correspond to the timing at which terminal 20 has stopped the beam sweep in FR2 in the process of S303.

Further, the process of S307 may be carried out based on Pmax in the above-described control flow. For example, terminal 20 may cancel the stoppage of the beam sweep in FR2 when the value of Pmax received at or after a predetermined timing is greater than a threshold and/or when the number of Pmaxes is less than a predetermined threshold. Note that, the "predetermined timing" may correspond to the timing at which terminal 20 has received Pmax in the process of S101, or may correspond to the timing at which terminal 20 has stopped the beam sweep in FR2 in the process of S303, for example.

For example, when terminal 20 moves away from the area of base station 10 which configures Pmax, terminal 20 may cancel the stoppage of the communication operation in FR2 (for example, the stoppage of the beam sweep in FR2). Accordingly, the determination of whether or not to cancel the stoppage of the communication operation in FR2 (for example, the stoppage of the beam sweep in FR2) may be performed based on the value of received Pmax and the number of received Pmaxes.

Note that, when terminal 20 moves away from the area of base station 10 which configures Pmax, another control on the communication operation in FR2 may be canceled. For example, when terminal 20 moves away from the area of base station 10 which configures Pmax, terminal 20 may cancel reduction of the transmit power for FR2 based on control method 1. Alternatively, when terminal 20 moves away from the area of base station 10 which configures Pmax, terminal 20 may cancel stoppage of the communication in FR2 based on control method 2. The determination of whether or not the terminal moves away from the area of base station 10 which configures Pmax may be based on the value of received Pmax and the number of received Pmaxes.

In control method 3 described above, terminal 20 controls, based on the control information on the transmit power for the LTE band and/or FR1, whether or not to stop the signal search process in FR2. This method makes it possible for terminal 20 to appropriately stop the signal search process even in radio communication using FR2 for which transmit power control is not specified, so as to reduce interference with other equipment more than the existing techniques do.

Moreover, in control method 3 described above, terminal 20 determines, based on the value of Pmax and/or the number of Pmaxes, whether or not to stop the signal search process in FR2. This method makes it possible for terminal 20 to perform control whereby the signal search process in FR2 is not stopped when power control is desired in the LTE band and/or FR1 but not in FR2.

In addition, control method 3 described above stops the signal search process in FR2, so that it is possible to save power consumed by terminal 20.

Note that terminal 20 according to the present embodiment may use any one of control methods 1 to 3 described above, or a combination of two or more thereof.

For example, when data communication is being performed, terminal 20 may perform control of reducing the transmit power for FR2 based on control method 1. When data communication is not being performed, terminal 20 may perform control of stopping the signal search process in FR2 based on control method 3, or may perform control of stopping the communication in FR2 based on control method 2.

Alternatively, when terminal 20 is performing data communication, the terminal may determine whether or not to continue the data communication. When continuing the data communication, terminal 20 may perform the control of reducing the transmit power for FR2, and continue the data communication. On the other hand, when not continuing the data communication, terminal 20 may perform the control of stopping the communication in FR2. Terminal 20 may fall back to another communication system (e.g., the communication system in LTE and/or FR1, or Wi-Fi (registered trademark)) when stopping the communication in FR2.

For example, it may be determined, based on the value of Pmax and/or the number of Pmaxes, whether or not the data communication should be continued. For example, terminal 20 may determine that the data communication should not be continued when Pmax is equal to or less than a threshold and/or the number of Pmaxes is equal to or greater than a predetermined number, and may determine that data communication should be continued when Pmax is greater than the threshold and/or the number of Pmaxes is less than the predetermined number.

Alternatively, terminal 20 may perform the control of stopping the signal search process in FR2 and/or the control of stopping the communication in FR2, regardless of whether or not the terminal is performing data communication. In this case, it may be determined, based on the value of Pmax and/or the number of Pmaxes, whether or not the control of stopping the signal search process in FR2 and/or the control of stopping the communication in FR2 are to be performed. For example, when Pmax is equal to or less than a threshold and/or the number of Pmaxes is equal to or greater than a predetermined value, terminal 20 may determine to perform the control of stopping the signal search process in FR2 and/or the control of stopping the communication in FR2.

Note that "Pmax" in the above-described embodiments is an example of the control information on transmit power for the LTE band and/or FR1, and the present disclosure is not limited to this example. The control information on transmit power for the LTE band and/or FR1 may be replaced by other terms.

Note also that, the thresholds compared with the value indicated by Pmax in the above-described embodiments may be different from each other. For example, the thresholds may be different between control methods 1 to 3 described above. Note also that, the predetermined numbers compared with the number of Pmaxes in the above-described embodiments may be different from each other. For example, the predetermined numbers may be different between above-described control methods 1 to 3

Note also that, the phrase "terminal 20 receives Pmax" in the above-described embodiments may correspond, for example, to "terminal 20 receives the notification of Pmax" or "terminal 20 detects Pmax." Note also that, the word "detect" may be replaced with other expressions such as "find out," "recognize," "identify," and the like. Note also that, what "terminal 20 does not receive Pmax" may correspond to what "the number of Pmaxes received by terminal 20 is zero."

### (Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

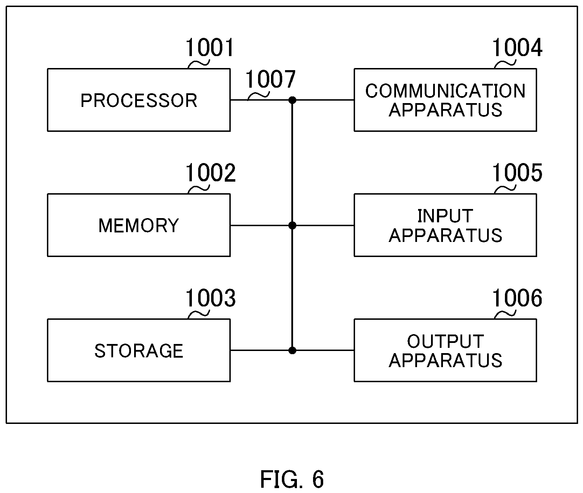

For example, the base station, terminal, and the like according to an embodiment of the present disclosure may function as a computer that executes processing of a radio communication method of the present disclosure. FIG. 6 illustrates an exemplary hardware configuration of the base station and the terminal according to one embodiment of the present disclosure. Physically, base station 10 and terminal 20 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 10 and of terminal 20 may include one apparatus or a plurality of apparatuses illustrated in the drawings or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203, and the like described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 103 of base station 10 control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Applied System)

The aspects and embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information or the like (see the item of "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements can be identified by any suitable names, and various names assigned to these various channels and information elements are not limitative in any respect.

### (Base Station (Radio Base Station))

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

The reference signal can also be abbreviated as an RS and may also be called as a pilot depending on the applied standard.

The description "based on" used in the present disclosure does not mean "based only on," unless otherwise specified. In other words, the description "based on" means both of "based only on" and "based at least on."

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus may be replaced with "means," "circuit," "device," or the like.

In a case where terms "include," "including," and their modifications are used in the present disclosure, these terms are intended to be inclusive like the term "comprising." Further, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that are used in each user equipment) on the basis of TTI to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

One aspect of the present disclosure is useful for a mobile communication system.

### Reference Signs List

- 10: Base station
- 20: Terminal
- 101, 202: Transmission section
- 102, 201: Reception section
- 103, 203: Control section

## Claims

1. A terminal, comprising:
a reception section that receives control information on transmit power for a first frequency band; and
a control section that controls, based on the control information, whether or not to transmit an uplink signal in a second frequency band.

2. The terminal according to claim 1, wherein
the control section performs control of stopping transmission of the uplink signal when a value indicated by the control information is equal to or less than a threshold.

3. The terminal according to claim 1, wherein
the control section performs control of stopping transmission of the uplink signal when the number of times the control information is received per predetermined time period is equal to or greater than a threshold.

4. The terminal according to claim 1, wherein
the control section performs control of stopping transmission of the uplink signal when the terminal is located in a specific area.

5. The terminal according to claim 4, wherein
the control section determines, based on a location coordinate of a device disposed in the specific area and/or based on information indicative of a distance between the terminal and a base station located in the specific area, whether or not the terminal is located in the specific area.

6. A radio communication control method, comprising:
receiving control information on transmit power for a first frequency band;
controlling, based on the control information, whether or not an uplink signal in a second frequency band is transmitted.
